Europäisches Patentamt

European Patent Office

Office européen des brevets

(19)

(11) Publication number: **0 024 454**
**B1**

(12) **EUROPEAN PATENT SPECIFICATION**

(45) Date of publication of patent specification: **28.09.83**

(21) Application number: **79301719.5**

(22) Date of filing: **22.08.79**

(51) Int. Cl.³: **F 16 H 37/04**

(54) **Power transmission unit for motor vehicles.**

(43) Date of publication of application:
**11.03.81 Bulletin 81/10**

(45) Publication of the grant of the patent:
**28.09.83 Bulletin 83/39**

(84) Designated Contracting States:
**DE FR GB**

(56) References cited:
**DE - A - 1 650 774**
**DE - A - 2 707 699**
**DE - A - 2 734 740**
**DE - B - 1 655 078**
**GB - A - 1 321 522**
**US - A - 3 906 817**
**US - A - 4 074 581**

(73) Proprietor: **TOYOTA JIDOSHA KABUSHIKI
KAISHA**
**1, Toyota-cho Toyota-shi
Aichi-ken 471 (JP)**

(72) Inventor: **Numazawa, Akio**
**35, 2-chome, Nagaike-cho**
**Showa-ku Nagoya-shi, Aichi-ken, 466 (JP)**
Inventor: **Arai, Hajime**
**1088-446, Aza-Hirako Fujieda, Nisshin-cho
Aichi-gun, Aichi-ken, 470-01 (JP)**

(74) Representative: **Brunner, Michael John et al,
GILL JENNINGS & EVERY 53-64 Chancery Lane
London WC2A 1HN (GB)**

Courier Press, Leamington Spa, England

Power transmission unit for motor vehicles.

The present invention relates to a power transmission unit for motor vehicles, and more particularly to an improvement of a power transmission unit of the type which comprises an auxiliary transmission for selectively completing low and high speed drive power trains and a primary transmission for selectively completing a plurality of forward drive power trains and a reverse drive power train after one of the low and high speed drive power trains is completed.

In such a power transmission unit as described above, when the primary transmission is shifted to a desired position after completion of a low speed drive power train, a suitable change-speed ratio can be selected to obtain good drivability during travel of the vehicle on town roads or mountain roads. When the primary transmission is shifted to a desired position after completion of a high speed drive power train, a suitable change-speed ratio can be selected to obtain good drivability during travel of the vehicle on a highway. Thus, the power transmission unit of this type is very useful to ensure good drivability without unnecessary fuel consumption under various travelling conditions. In case the power transmission unit is adapted to a small automotive vehicle of the front-engine, front-wheel drive type, it is necessary that the transmission unit be designed to be assembled within a limited space on the vehicle.

Prior art of possible background interest is to be found in DE—A—1,650,774.

In US—A—3,799,003 there is shown a power transmission unit which comprises an auxiliary transmission for selectively completing low and high speed drive power trains, the auxiliary transmission having an input shaft for driving connection to an output shaft of an engine through a disengageable coupling; a primary transmission having a main shaft and a countershaft parallel with the main shaft, the main shaft being provided with a plurality of drive gears for selectively driving respective change-speed gears on the countershaft; and a final drive gearing drivingly connected to the countershaft to drive a differential gear unit.

According to the present invention such a unit is characterized in that the primary transmission is arranged between the disengageable coupling and the auxiliary transmission and has a main shaft which comprises a sleeve shaft surrounding the input shaft, the main sleeve shaft being connected to an output member of the auxiliary transmission.

The present invention is thus able to provide a transmission unit which can be assembled in a limited space due to the surrounding of the auxiliary transmission input shaft by the sleeve main shaft of the primary transmission.

The auxiliary transmission may be constructed by relatively small and light-weight component parts.

Furthermore, the input shaft of the auxiliary transmission may act as a torsion bar to reduce unpleasant shocks given to the transmission unit. Also such an auxiliary transmission can be designed to be easily removed from the transmission unit leaving the primary transmission only to be used.

Two examples of a transmission unit according to the present invention will now be described with reference to the accompanying drawings, in which:—

Figure 1 is a schematic skeleton view showing a first embodiment of a power transmission unit;

Figure 2 is a schematic skeleton view showing another embodiment of a power transmission; and

Figure 3 is a diagrammatic end view of the power transmission unit of Figure 2, showing the different shaft axes and their relative positions, as well as the meshing engagement occurring between the various gears.

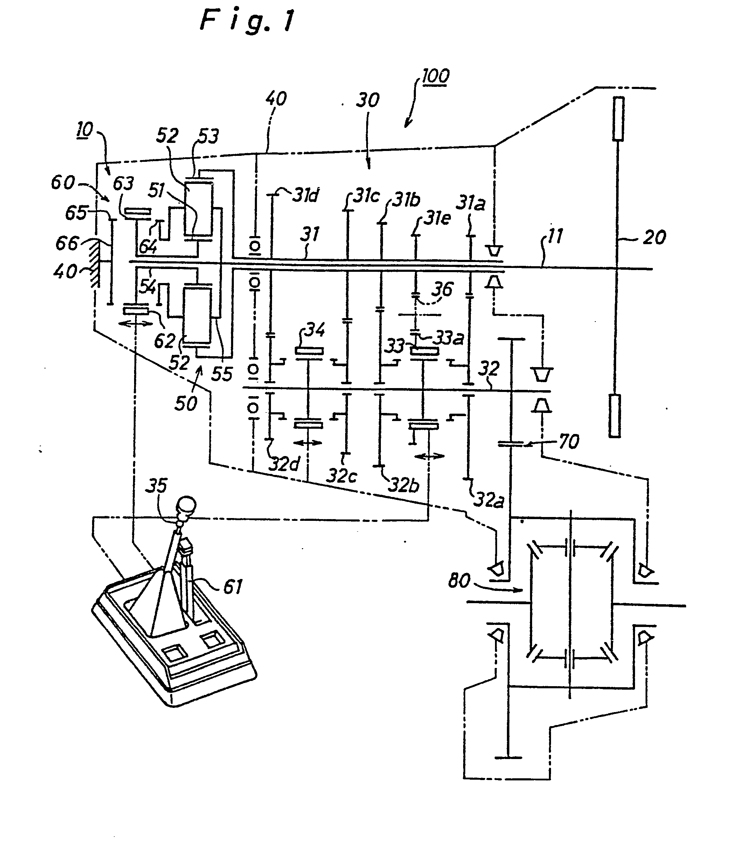

In Figure 1 there is schematically illustrated a power transmission unit 100 for a motor vehicle of the front-engine, front-wheel drive type in which an internal combustion engine is arranged in a plane transversely of the longitudinal vehicle axis. The transmission unit 100 includes a primary transmission 30 with change-speed gears and an auxiliary transmission 10 with a single planetary gear set 50. The auxiliary transmission 10 has an input shaft 11 drivingly connected to a crankshaft of the engine by way of a friction clutch 20, and the primary transmission 30 has a main sleeve shaft 31 in surrounding relationship to the input shaft 11. The main shaft 31 serves as an output shaft of the auxiliary transmission 10 and as an input shaft of the primary transmission 30. The sleeve shaft 31 is rotatably supported from a transmission housing 40 between the friction clutch 20 and the auxiliary transmission 10 and is also integrally provided with first, second, third and fourth drive gears 31a, 31b, 31c and 31d and with a reverse drive gear 31e.

The planetary gear set 50 of auxiliary transmission 10 includes a sun gear 51 which is integral with a sleeve shaft 54 in surrounding relationship to the input shaft 11. Planet gears 52 are rotatably supported by a carrier member 55 integral with the input shaft 11 and are in mesh with the sun gear 51 and a ring gear 53. The ring gear 53 is securedly connected with the main sleeve shaft 31. The auxiliary transmission 10 further comprises a selector gear unit 60 which is provided to determine a drive power train in the planetary gear set 50. The selector gear unit 60 is operatively connected with a manual selector lever 61 which has three positions corresponding respectively to Neutral, Low and High speed drive power trains. The selector gear unit 60 further includes a slide 62 having thereon an inner spline selectively engageable with a spline 63, with the spline 63 and a spline 64 or with the spline 63 and a spline 65. The splines 63, 64 and 65 are integrally formed with the sleeve shaft 54, the carrier member 55 and a reaction member 66 respectively. The reaction member 66 is securely mounted on a portion of the transmission housing 40, and the slide sleeve 62 is operatively connected with the selector lever 61 by means of any suitable mechanical linkage.

The primary transmission 30 comprises a countershaft 32 which is rotatably supported from the transmission housing 40 in parallel with the main sleeve shaft 31. The countershaft 32 is drivingly connected to a differential gear unit 80 by way of a final drive gearing 70. Four change-speed gears 32a, 32b, 32c and 32d are rotatable on the countershaft 32 and in mesh with the first, second, third and fourth drive gears 31a, 31b, 31c and 31d respectively. A first synchronizer 33 is operatively connected with a shift lever 35 to selectively establish meshing engagements of the change-speed gears 32a and 32b with the countershaft 32. The first synchronizer 33 is also integrally provided with a reverse gear 33a which is selectively engaged with the reverse driving gear 31e through a reverse idler gear 36. A second synchronizer 34 is further operatively connected with the shift lever 35 to selectively establish meshing engagements of the change-speed gears 32c and 32d with the countershaft 32.

In operation of the power transmission 100, when the slide sleeve 62 is shifted by the selector lever 61 in a rightward direction, it is brought into engagement with the splines 63 and 64 to connect the carrier member 55 with the sleeve shaft 54. As a result, the sun gear 51 rotates together with the carrier member 55, and the main sleeve shaft 31 rotates at the same speed as that of the input shaft 11 to complete a low speed drive power train. Then the primary transmission 30 acts to transmit drive torque from the engine to the final drive gearing 70 in response to shifting operation of the first or second synchronizer. Thus, a suitable change-speed ratio is obtainable for the torque transmission to ensure good drivability without unnecessary fuel consumption during travel of the vehicle on town roads or mountain roads.

When the slide sleeve 62 is shifted by the selector level 61 in a leftward direction, it is brought into engagement with the splines 63 and 65 to connect the sleeve shaft 54 with the reaction member 66. As a result, the sun gear 51 is locked to the transmission housing 40, and the main sleeve shaft 31 rotates at a speed higher than that of the input shaft 11 to complete a high speed drive power train. Then, the primary transmission 30 acts to transmit drive torque from the engine to the final drive gearing 70 in response to shifting operation of the first or second synchronizer. Thus, a suitable change-speed ratio is obtainable for the torque transmission to ensure good drivability without unnecessary fuel consumption during travel of the vehicle on a highway. In this instance, if the travel speed of vehicle is equal to that under the low speed drive power train, the rotational speed of engine will decrease.

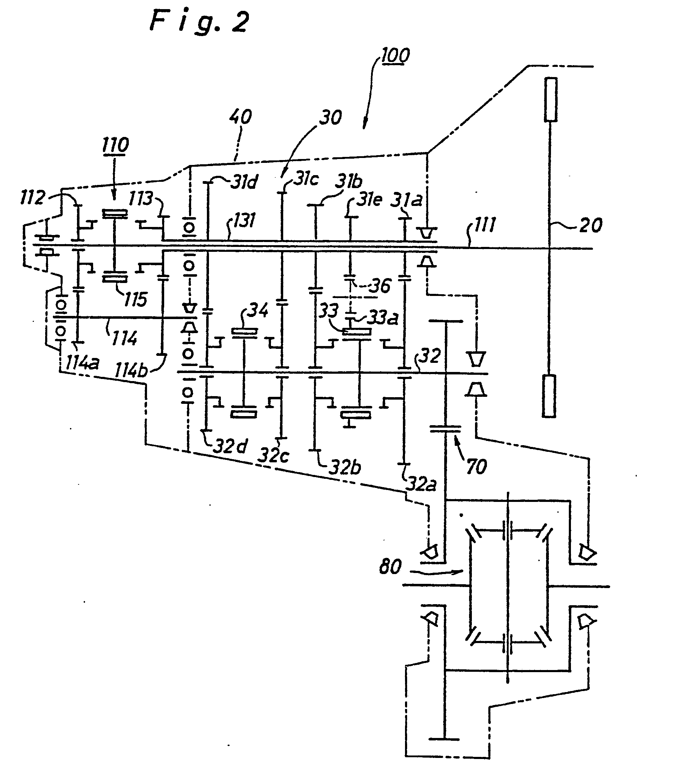

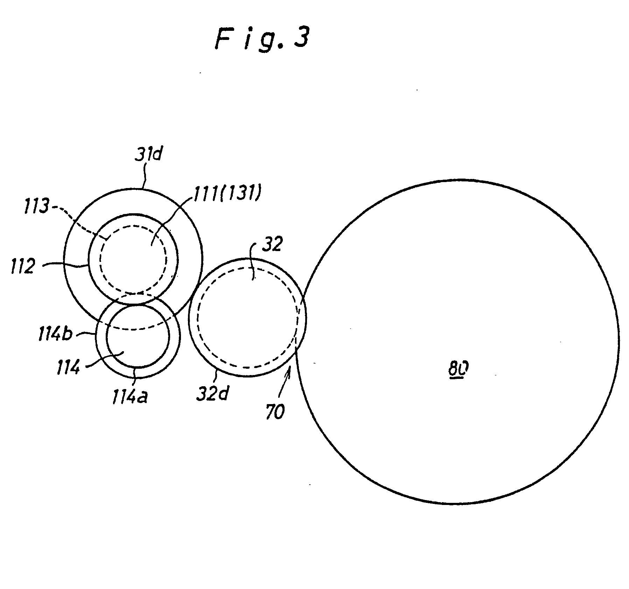

Figure 2 illustrates another embodiment of the present invention in which an auxiliary transmission 110 of the counter-gear type is adapted to complete low and high speed drive power trains. The auxiliary transmission 110 includes a gear 112 of large diameter rotatable on an input shaft 111 and a gear 113 of small diameter integral with a main sleeve shaft 131, the input shaft 111 and the main sleeve shaft 131 correspond respectively with the input shaft 11 and main sleeve shaft 31 of the previous embodiment. A counter-shaft 114 is rotatably supported from the transmission housing 40 in parallel with the input shaft 111 and is integrally provided with a counter-gear 114a of small diameter and a counter-gear 114b of large diameter which are engagement with the gears 112 and 113 respectively. The auxiliary transmission 110 is further provided with a slide sleeve 115 which is operatively connected with a selector lever (not shown) to provide a drive connection between the gear 112 and the input shaft 111 or between the gear 113 and the input shaft 111. All other constructions remain unchanged and the same reference numerals are used for the same component parts and portions of the previous embodiment. In Figure 2, although the shafts 111, 114, 131 and 32 and the differential gear unit 80 are illustrated in a common plane to clearly depict meshing engagement of the respective gears, they are arranged in practice as shown in Figure 3 for assembly in a limited space.

In operation of the auxiliary transmission 110, when the slide sleeve 155 is shifted to connect the input shaft 111 with the right-hand gear 113, the main sleeve shaft 141 rotates together with the input shaft 111 to complete a low speed drive train. When the slide sleeve 115 is subsequently shifted to connect the input shaft 111 with the left-hand gear 112, the rotational speed of main sleeve shaft 131 increases due to a predetermined gear ratio of the gears 112, 114a, 114b and 113, completing a high speed drive power train. All other operational features and procedures are the same as in the previous embodiment and no repetition is made hereinafter.

As is understood from the above description, the auxiliary transmission 10 or 110 is arranged between the input shaft 11 or 111 and the main sleeve shaft 31 or 131 of the primary transmission 30 to directly receive drive torque from the engine thereon. This means that the auxiliary transmission may be constructed by relatively small and light-weight component parts to be assembled in a limited space. The above embodiments are further characterized in that the input shaft 11 or 111 extends through the main sleeve shaft 31 or 131 of the primary transmission 30 and is connected at its one end with the friction clutch 20 and at its other end with the auxiliary transmission 10 or 110. Thus, the input shaft 11 or 111 acts as a torsion bar to reduce unpleasant shocks given to the transmission unit upon engagement of the friction clutch 20 or engine braking operation. Furthermore, in practice of the present invention, it is to be noted that a hydraulic shifting mechanism may be adapted to automatically shift the auxiliary transmission responsive to travel speed of the vehicle.

## Claims

1. A power transmission unit (100) for a motor vehicle, comprising an auxiliary transmission (10, 110) for selectively completing low and high speed drive power trains; a primary transmission (30) having a main shaft (31, 131) and a countershaft (32) parallel to the main shaft, the main shaft being provided with a plurality of drive gears (31a, 31b, 31c, 31d) for selectively driving respective change-speed gears (32a, 32b, 32c, 32d) on the countershaft; and a final gear (70) drivingly connected to the countershaft to drive a differential gear unit (80); the auxiliary transmission having an input shaft (11) in driving connection with an output shaft of an engine through a disengageable coupling (20) characterized in that the primary transmission (30) is arranged between the disengageable coupling (20) and the auxiliary transmission (10, 110) and has a main shaft which comprises a sleeve shaft (31, 131) surrounding the input shaft (11, 111), the main sleeve shaft (31, 131) being connected to the output member (53, 113) of the auxiliary transmission (10, 110).

2. A power transmission unit according to claim 1, characterized in that the auxiliary transmission (10, 110) is arranged to be shifted to a first position in which the main sleeve shaft (31, 131) is driven at the same speed as that of the input shaft (11, 111) and to a second position in which the main sleeve shaft (31, 131) is driven at a speed higher than that of the input shaft (11, 111).

3. A power transmission unit according to claim 1 or claim 2, characterized in that the input shaft (11, 111) comprises a torsion bar extending within the main sleeve shaft (31, 131) and having one end connected to an input member (54) of the auxiliary transmission (10, 110) and the other end connected to an output member of the disengageable coupling (20).

4. A power transmission unit according to any of claims 1 to 3, characterized in that the auxiliary transmission (10) comprises a planetary gear set (50) and a reaction member (66) fixed to a transmission housing (40), the planetary gear set (50) including a sleeve shaft (54) in surrounding relationship to the input shaft (11), a sun gear (51) integral with the sleeve shaft (54), a carrier member (55) integral with the input shaft (11), a ring gear (53) connected with the main sleeve shaft (31) of the primary transmission (30), and a planet gear (52) rotatably supported by the carrier member (55) and in mesh with the sun gear (51) and ring gear (53), the auxiliary transmission (10) further comprising a selector gear unit (60) for selectively connecting the sleeve shaft (54) to the carrier member (55) or the reaction member (66).

5. A power transmission unit according to any of claims 1 to 3, characterized in that the auxiliary transmission (110) comprises a first gear (112) of large diameter rotatable on the input shaft (111), a second gear (113) of small diameter integral with the main sleeve shaft (131), a countershaft (114) arranged in parallel with the input shaft (111) and having a third gear (114a) of small diameter in mesh with the first gear (112) and a fourth gear (114b) of large diameter in mesh with the second gear (113), and a selector gear unit (115) for selectively connecting the input shaft (111) to the first or second gears (112, 113 respectively).

## Revendications

1. Un dispositif de transmission de puissance (100) pour une automobile, comprenant: une boîte de vitesses auxiliaire (10, 110) pour établir sélectivement des chaînes dynamiques d'entraînement à petite et à grande vitesse, une boîte de vitesses principale (30) ayant une arbre primaire (31, 131) et un arbre intermédiaire (32) parallèle à l'arbre primaire l'arbre primaire étant muni d'une série de pignons menants (31a, 31b, 31c, 31d) pour entraîner sélectivement des pignons de changement de vitesse (32a, 32b, 32c, 32d) portés par l'arbre intermédiaire; et un engrenage final (70) relié d'une manière assurant la transmission de l'entraînement à l'arbre intermédiaire pour entraîner un engrenage différentiel (80); la boîte de vitesses auxiliaire ayant un arbre d'entrée (11) relié d'une manière assurant la transmission de l'entraînement à un arbre de sortie d'un moteur par l'intermédiaire d'un accouplement débrayable (20), caractérisé en ce que le boîte de vitesses principale (30) est disposée entre l'accouplement débrayable (20) et la boîte de vitesses auxiliaire (10, 110) et comporte un arbre primaire qui est constitué par un arbre tubulaire (31, 131) entourant l'arbre d'entrée (11, 111), l'arbre primaire tubulaire (31, 131) étant relié à l'organe de sortie (53, 113) de la boîte de vitesses auxiliaire (10, 110).

2. Un dispositif de transmission de puissance selon la revendication 1, caractérisé en ce que la boîte de vitesses auxiliaire (10, 110) est agencée de façon à pouvoir être placée dans une première position dans laquelle l'arbre primaire tubulaire (31, 131) est entraîné à la même vitesse que l'arbre d'entrée (11, 111) et dans une seconde position pour laquelle l'arbre primaire tubulaire (31, 131) est entraîné à une vitesse supérieure à celle de l'arbre d'entrée (11, 111).

3. Un dispositif de transmission de puissance selon la revendication 1 ou la revendication 2, caractérisé en ce que l'arbre d'entrée (11, 111) comporte une barre de torsion qui s'étend à l'intérieur de l'arbre primaire tubulaire (31, 131) et qui a une extrémité accouplée à un organe d'entrée (54) de la boîte de vitesses auxiliaire (10, 110) et son autre extrémité accouplée à un organe de sortie de l'accouplement débrayable (20).

4. Un dispositif de transmission de puissance selon l'une quelconque des revendications 1 à 3, caractérisé en ce que la boîte de vitesse auxiliaire (10) comprend un ensemble d'engrenage planétaire (50) et un organe de réaction (66) fixé à un carter de transmission (40), l'ensemble d'engrenages planétaire (50) comprenant un arbre tubulaire (54) disposé de manière à entourer l'arbre d'entrée (11), un planétaire (51) solidaire de l'arbre tubulaire (54), un organe support (55) solidaire de l'arbre d'entrée (111), une couronne intérieure (53) accouplée à l'arbre primaire tubulaire (31) de la boîte de vitesses principale (30) et un satellite (52) porté à rotation par l'organe support (55) et en prise avec le planétaire (51) et avec la couronne dentée (53), le boîte de vitesses auxiliaire (10) comprenant, en outre, un mécanisme sélecteur (60) pour accoupler sélectivement l'arbre tubulaire (54) à l'organe support (55) ou à l'organe de réaction (66).

5. Un dispositif de transmission de puissance selon l'une quelconque des revendications 1 à 3, caractérisé en ce que la boîte de vitesses auxiliaire (110) comprend un premier pignon (112) de grand diamètre monté à rotation sur l'arbre d'entrée (111), un second pignon (113) de petit diamètre solidaire de l'arbre primaire tubulaire (131), un arbre intermédiaire (114) monté parallèlement à l'arbre d'entrée (111) et portant un troisième pignon (114a) de petit diamètre en prise avec le premier pignon (112) et un quatrième pignon (114b) de grand diamètre en prise avec le second pignon (113) et un mécanisme sélecteur (115) pour relier sélectivement l'arbre d'entrée (111) au premier ou au second pignon (112 et, respectivement, 113).

**Patentansprüche**

1. Lastschaltgetriebeeinheit (100) für ein Kraftfahrzeug, mit einem Gruppengetriebe (10; 110) für das wahlweise Aufbauen von Hoch- und Niedriggeschwindigkeits-Kraftübertragungs-Getriebezügen, einem Primär- oder Hauptgetriebe (30) mit einer Hauptwelle (31; 131) und einer dazu parallelen Zwischen- bzw. Vorgelegewelle (32), wobei die Hauptwelle mit einer Vielzahl von Antriebsrädern (31a, 31b, 31c, 31d) zum Wahlweisen Antreiben entsprechender Gangwechselräder (32a, 32b, 32c, 32d) auf der Vorgelegewelle versehen ist, und einem Abtriebs-Schlußrad (70), das für den Antrieb einer Differentialgetriebeeinheit (80) antriebsmäßig mit der Vorgelegewelle verbunden ist, wobei das Gruppengetriebe eine Eingangswelle (11) besitzt, die über eine Schaltkupplung (20) mit einer Abtriebswelle einer Antriebsmaschine in Antriebsverbindung steht, dadurch gekennzeichnet, daß das Hauptgetriebe (30) zwischen der Schaltkupplung (20) und dem Gruppengetriebe (10; 110) angeordnet ist und eine Hauptwelle besitzt, die eine Hohlwelle (31; 131) aufweist, die die Eingangswelle (11; 111) umgibt und mit dem Abtriebsglied (53; 113) des Gruppengetriebes (10; 110) verbunden ist.

2. Lastschaltgetriebeeinheit nach Anspruch 1, dadurch gekennzeichnet, daß das Gruppengetriebe (10; 110) in eine erste Schaltstellung, in der die Haupt-Hohlwelle (31; 131) mit der gleichen Geschwindigkeit wie die Eingangswelle (11; 111) angetrieben ist, und in eine zweite Schaltstellung schiebbar ist, in der die Haupt-Hohlwelle (31; 131) mit einer Drehzahl angetrieben ist, die über der der Eingangswelle (11; 111) liegt.

3. Lastschaltgetriebeeinheit nach Anspruch 1 oder 2, dadurch gekennzeichnet, daß die Eingangswelle (11; 111) einen Torsionsstab besitzt, der sich innerhalb der Haupt-Hohlwelle (31; 131) erstreckt und mit seinem einen Ende mit einem Eingangsgetriebeglied (54) des Gruppengetriebes (10; 110) und mit seinem anderen Ende mit einem Ausgangs- bzw. Abtriebsglied der Schaltkupplung (20) verbunden ist.

4. Lastschaltgetriebeeinheit nach einem der Ansprüche 1 bis 3, dadurch gekennzeichnet, daß das Gruppengetriebe (10) einen Planetenradsatz (50) mit einer die Eingangswelle (11) umgebenden Hohlwelle (54), einem mit der Hohlwelle (54) einstückigen Sonnenrad (51), einem mit der Eingangswelle (11) einstückigen Planetenradträger (55), einem mit der Haupt-Hohlwelle (31) des Hauptgetriebes (30) verbundenen Hohlrad (53) und einem über den Planetenradträger (55) drehbar gelagerten und mit dem Sonnenrad (51) und dem Hohlrad (53) in Eingriff stehenden Planetenrad (52), ein an einem Getriebegehäuse (40) befestigtes Reaktions- bzw. Stützglied (66), und eine Wählschaltradeinheit (60) aufweist, um wahlweise die Hohlwelle (54) mit dem Planetenradträger (55) oder mit dem Stützglied (66) zu verbinden.

5. Lastschaltgetriebeeinheit nach einem der Ansprüche 1 bis 3, dadurch gekennzeichnet, daß das Gruppengetriebe (110) ein auf der Eingangswelle (111) drehbares erstes Rad (112) großen Durchmessers, ein mit der Haupt-Hohlwelle (131) einstückiges zweites Rad (113) kleinen Durchmessers, eine zur Eingangswelle (111) parallele Zwischen- bzw. Vorgelegewelle (114) mit einem in Eingriff mit dem ersten Rad (112) stehenden dritten Rad (114a) kleinen Durchmessers und einem in Eingriff mit dem zweiten Rad (113) stehenden vierten Rad (114b) großen Durchmessers, und eine Wählschaltradeinheit (115) aufweist, um wahlweise die Eingangswelle (111) mit dem ersten bzw. mit dem zweiten Rad (112 bzw. 113) zu ver- binden.

# Fig. 1

# Fig. 2

# Fig. 3